Europäisches Patentamt

European Patent Office

Office européen des brevets

(11) Publication number: **0 372 677**
**A2**

## (12) EUROPEAN PATENT APPLICATION

(21) Application number: **89306139.0**

(22) Date of filing: **16.06.89**

(51) Int. Cl.⁵: **B60C 9/18**

The title of the invention has been amended (Guidelines for Examination in the EPO, A-III, 7.3).

(30) Priority: **05.12.88 US 279644**

(43) Date of publication of application:
**13.06.90 Bulletin 90/24**

(84) Designated Contracting States:
**DE ES FR GB IT**

(71) Applicant: **DICO TIRE, INC.**
**520 J.D. Yarnell Industrial Parkway**
**Clinton Tennessee 37716(US)**

(72) Inventor: **Bajer, Jacques Jack**
**16825 Kercheval Avenue**
**Grosse Pointe Michigan 48230(US)**

(74) Representative: **Ranson, Arthur Terence et al**
**W.P. Thompson & Co. Coopers Building**
**Church Street**
**Liverpool L1 3AB(GB)**

(54) **Pneumatic tire.**

(57) An improved pneumatic tire, such as a radial ply tire of the type including a radial carcass body ply or plies, side walls and a tread is disclosed which including at least one belt assembly (30, 36) positioned and aligned on the outer or inner circumference of the radial carcass body ply or plies (22), or positioned on both sides of the radial carcass body ply or plies (22). Between the radial carcass (12) and the tread (20), each belt assembly (30, 36) includes plural parallel, discontinuous, oriented fibers (34, 40) embedded in an elastomeric material, the fibes being oriented parallel to each other. The tire is characterised by the absence of cord belt plies on the periphery of the radial carcass body ply or plies (27) and the absence of cord belt plies on the shoulder of the radial carcass body ply or plies (22).

**FIG.1**

**FIG. 3**

## IMPROVED PNEUMATIC TIRE

The present invention relates to tire construction and manufacturing of pneumatic tires, in general, and more particularly, to an improved pneumatic tire structure involving reduced cost of materials and ease of manufacture.

Pneumatic tires for vehicle wheels are, of course, well known. Among the popular styles of pneumatic tires which have gained commercial acceptance are bias tires and radial tires. In each of these tires, cords, usually made of rayon, nylon, polyester, steel, glass or aramid filaments, are imbedded in the elastomeric carcass of the tire. In the radial tire, the cords in the elastomeric carcass are disposed in side-by-side position and extend from bead to bead over the crown of the tire at an angular relationship of approximately 90 degrees relative to the peripheral centerline of the tire and may be thought of as being positioned as radial spokes when viewing the tire carcass from a side elevation position. In a bias tire, the cords in the carcass are also positioned side-by-side, but at an angle of approximately 40 degrees relative to the peripheral centerline of the tire although other angular relationships are contemplated when referring to a tire as a bias tire.

In either event the tire carcass is typically provided with one or more peripheral plies or belts around the circumference of the tire. Again these plies or belts are typically formed of an elastomeric material having cords embedded therein. The cords may be oriented perpendicular to the peripheral centerline of the tire or at an angle or bias to the peripheral centerline of the tire. The tire tread is positioned on top of the circumferential plies.

Steel or textile cord belted radial tires have certain speed and performance characteristics which have made such tires extremely desirable for use on a variety of ground vehicles and aircraft. However, these speed and other performance characteristics are achieved at substantially higher costs not only for the raw materials used in the tire, but also in the tire manufacturing process. Thus the decision to use, for example, a steel cord belted radial tire on a particular vehicle and for a particular purpose, requires a balancing of cost with the performance characteristics which the tire is expected to achieve.

There are numerous specialty vehicles such as golf carts, lawn and garden tractors, vehicles or machines, riding lawn mowers, utility and recreational vehicles, small all-terrain and off-the-road vehicles which do not require tires having the same speed and performance characteristics as passenger cars, trucks and aircraft. In addition, since these specialty vehicles weigh less than the other types of vehicles mentioned above, the tires themselves may be of reduced weight and strength while still being fully safe and fully suitable for specialty use.

United States Patent Specification No. 3,570,573 discloses a structural ply for a pneumatic tire, where by ply includes parallel continuous cords embedded in an elastomeric compound and uniformly dispersed, oriented short fibers also disposed in the elastomeric compound. Thus the poly includes both cords and fibers. A distinction should now be made between "cord", "yarn" and "filament" as those terms are understood by those of ordinary skill in the art. Cords are understood in the tire industry structurally, as being made up of a series of strands of material, with a strand, in turn, being a gathered plurality of filaments. The filaments are wound or twisted together to form a strand, and the strands are twisted or cabled to form a cord. A filament is understood in the tire industry to refer to a single, individual fiber. (See, generally, the aforementioned U.S. Patent Specification Column 3, line 70, through column 4, line 4) Both the filament and the cord, of course, may be made of rayon, nylon, polyester, glass, cotton or metal.

United States Patent Specification No. 3,570,575 also discloses circumferential plies where the elastomeric material includes of both cords and filaments, again, with certain orientation of the cords and filaments described in the patent.

Canadian Patent Specification No. 889,677 illustrates and describes a pneumatic tire with peripheral plies formed of an elastomeric material have parallel, discontinuous cords embedded therein. The cords are oriented parallel to each other and parallel to the peripheral centreline of the tire.

United States Patent Specification No. 3,772,130 also discloses a ply configuration which includes both cords and filaments, again with specific orientation of both cords and fibers as described therein.

United States Patent Specification No. 3,799,233 illustrates a tire construction where it appears that both plies and breakers are provided, the breakers being of elastomeric material and including small oriented particles of a particular modulus of elasticity, such as glass, again oriented at a specific angle as described therein.

United States Patent Specification No. 3,918,506 illustrates an improved tire construction including multiple plies, one of cords and the other of filaments, strands, yarn or cords.

Lastly, United States Patent Specification No.

4,067,372 illustrates the use of "shoulder" plies in addition to circumferential plies, the shoulder plies being an elastomeric material and including fibers therein.

As may be appreciated from a brief review of the seven prior patents referred to above, the vehicle tires as described therein typically require both cords and fibers, of cicumferential plies and shoulder plies, or other expensive variations thereof. Prior to the present invention, however, no attention has been paid to the particular vehicle operational requirements and to reducing the cost of manufacture of the speciality tire, such as the tire for a golf cart, lawn or garden tractor, etc., while maintaining many of the benefits of the cord reinforced, radial belted tire.

The present invention seeks to provide an improved, lower cost pneumatic tire having a particular utility as a speciality tire for applications on vehicles which are light, lightly loaded, do not operate at high speeds, and do not have to be decelerated or accelerated severely, while retaining many of the advantages of radial ply tire performance, while being substantially lighter in weight, less expensive in material cost, and easier to manufacture.

The radial pneumatic tire of the present invention provides peripheral plies that can be positioned over and/or under the radial carcass body ply or plies, or between the plies of the tire. These carcass peripheral plies are formed on an elastomeric material incorporating discontinuous, parallel oriented short lengths of filaments embedded therein. The filaments are to be distinguished from the prior art use of cord. The tire construction according to the principles of the present invention is characterised by the absence of a need for peripheral plies containing cords and by the absence of a need for shoulder plies containing cords.

According to the present invention then, a radial pneumatic tire of the type including a carcass, opposed side walls and a tread, the tire comprising means for restricting the periphery of the tire carcass against outward expansion and for preventing the radial cords of the tire carcass from spreading under rolling loads, is characterised in that the carcass periphery restricting and cord spreading prevention means includes at least one belt ply positioned and aligned on the circumference of the tire carcass, the belt ply comprising an elastomeric matrix containing a plurality of discontinuous fibers, each of those fibers having a longitudinal axis, the fibers positioned in a plurality of rows and oriented such that the axes of the fibers are parallel to each other.

The invention will now be further described by way of examples with reference to the accompanying drawings, in which:

Figure 1 is a partial perspective view, with parts broken away and shown in section, of a pneumatic tire utilizing belts or plies according to the principles of the present invention;

Figure 2 is a perspective illustration of one form of a ply according to the principles of the present invention; and

Figure 3 is a perspective illustration of a second form a ply according to the principles of the present invention

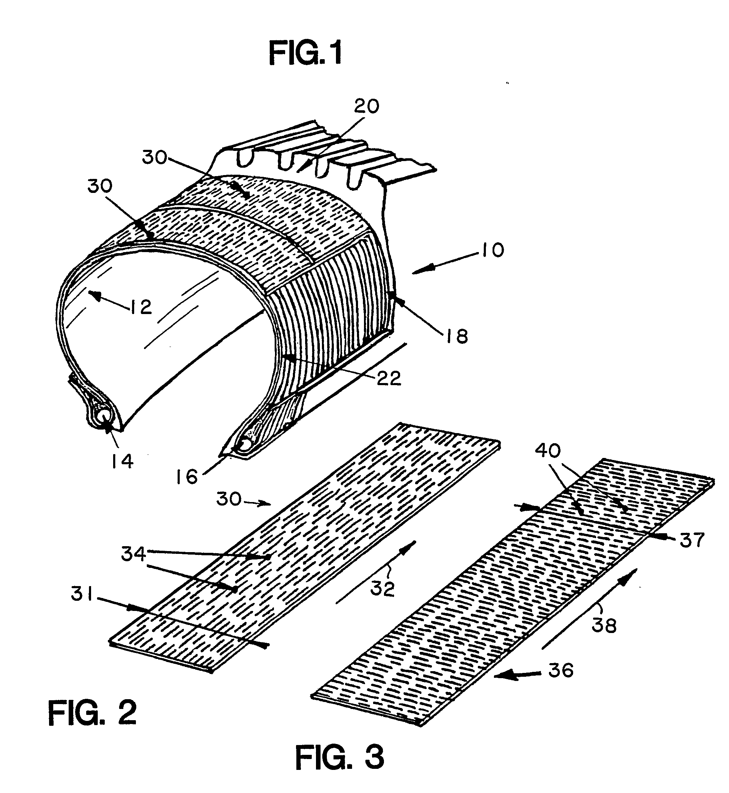

Referring to the drawings, Figure 1 illustrates, diagrammatically, a radial tire 10 including a carcass or body 12 of generally inverted U-shaped configuration, as is conventional, with the carcass terminating in beads 14, 16. The radial tire includes sidewalls 18 (only one is illustrated) and a peripheral tread 20. The radial carcass, as is conventional, would be formed of an elastomeric ply material having a plurality of radial body cords 22 embedded in the elastomeric ply material. As is well-known, the radial body cord ply or plies may be formed of nylon, rayon, polyester, glass, cotton, aramid or metal. The description of the tire construction is general in nature and, therefore, is not intended to restrict or limit the scope of the present invention.

According to the principles of the present invention, means are provided for somewhat restricting or controlling the periphery of the tire against outward expansion when the tire is inflated, but mainly to prevent the radial body ply cords from spreading excessively when the tire rolls under load. That objective is accomplished, according to the present invention, through the use of one or more belt plies 30 on the circumferential periphery of the carcass over and/or under the carcass body ply or plies. Figure 1 illustrates two such belt plies 30 positioned over the radial carcass body ply 22 and under the tread 20. Again, these two belt plies can be positioned under the radial carcass body ply 22, or in "over and under" combinations.

Referring next to Figure 2, one belt ply 30 is illustrated in greater detail. The belt consists of a thin, flat sheet having a width 31 and a longitudinal direction or length 32, and with filaments or fibers 34 oriented in the longitudinal direction 32. The belt ply is then cut to a length sufficient to completely encircle the periphery of the tire radial carcass. Alternatively a series of such belt plies may be placed to encircle the periphery of the radial carcass. The width 31 of the belt ply 30 is substantially less than the length of the belt ply, the width 31 being sufficient (but not restricted to) to generally cover the crown of the radial carcass from tread shoulder to tread shoulder.

The belt ply 30 is formed of an elastomeric material, and, for this purpose, any of the several types of elastomers heretofore used in peripheral tire plies or belts may be utilized. Embedded within the belt 30 are a series of short discontinuous fibers 34. The fibers 34 are arranged in a plurality of parallel rows and the fibers in each row are oriented with their axes in the same direction. In the belt ply illustrated in Figure 2, the longitudinal axes of the fibers are oriented parallel to the longitudinal axis direction of the belt ply. The term fiber refers to yarns or filaments which are not bundled together into cords, although the fibers may be formed of the same material heretofore used for cords and/or fibers, namely, nylon, rayon, polyester, cotton, metal, aramid or glass. There is no requirement that all the fibers in a belt be of the same material. The preferred material is chopped, oriented cotton fibers. The fibers may have a diameter of about 0.003 inches (0.0762mms) and a length up to about 0.50 inches (1.27cms). The dimensions are provided as being illustrative. The elastomeric material may be a synthetic rubber material, a natural rubber material or the like as heretofore used and the technique for embedding the fibers into the elastomeric material may be the same as that heretofore used for embedding cord in the elastomeric material. In this regard, reference should be had to the aforementioned Canadian Patent which describes techniques for forming the elastomer-cord belt; the same techniques may be used for forming the elastomer-fiber belt of the present invention. The belt may be referred to as an elastomeric matrix containing the fibers.

The belt ply as manufactured according to the aforementioned description demonstrates tensile rigidity about an axis parallel to the axes of the fibers and flexibility about an axis perpendicular to the axes of the discontinuous, oriented fibers. By "tensile" rigidity, we refer to a resistance to elongation in a direction parallel to the axes of the fibers.

Figure 3 illustrates a belt ply 36 having a width 37 and a length or longitudinal direction 38. The belt ply 36 is formed of an elastomeric material and has embedded therein a series of oriented, short, discontinuous fibers 40, the fibers being oriented in a plurality of parallel rows with the longitudinal axes of the fibers parallel to each other. In the embodiment of Figure 3, the axes of the fibers are perpendicular to the longitudinal direction or axis 38 of the belt ply. The belt ply 36 of Figure 3 is of sufficient length when positioned in its longitudinal direction 38 to completely encircle the periphery of the radial carcass. A series of belt plies may be positioned and aligned in the longitudinal direction to encircle the radial carcass. The width 37 of the belt ply 36, in a direction parallel to the axes of the fibers, is again sufficient to cover the crown of the tire from tread shoulder to tread shoulder. The belt ply 36 of Figure 3 demonstrates tensile rigidity about an axis parallel to the axes of the fibers (i.e., resistance across the width of the belt ply) and flexibility about an axis perpendicular to the axis of the fibers.

The radial tire of the present invention may include one or more belt plies 30, one or more belt plies 36, or combinations of belt plies 30 and 36 depending upon the belt strength, and tire performance characteristics which may be desired. The relative flexibility, and strength of the tire can be varied according to the principles of the present invention by varying the fiber density of the belt ply or plies, by varying the fiber orientation, and by varying the hardness of the elastomeric compound forming the belt ply matrix.

The present invention provides certain surprising results notwithstanding that the tire is characterized by the absence of cords on the outer circumference of the tire radial carcass and by the absence of cords on the shoulders of the tire radial carcass. Among the more important benefits for the specialty tire of the type described are ease of manufacture and lower cost. The manufacturing process is similar to the one used to efficiently manufacture a conventional bias ply tire, whereby the raw tire components are assembled in one step on a tire assembling machine forming a cylindrical raw tire which will be shaped from its cylindrical form to a toroidal shell form by the tire molding and vulcanizing machine. Thus the manufacturing process is less expensive and less time consuming as compared to the multi-step assembling process used to assemble conventional radial tire components and the preshaping process required to form the radial tire raw assembly prior to proceeding with the molding and vulcanizing process for the conventional radial tire.

In addition, the radial tires manufactured according to the present invention have a substantially lower cost of materials and a lesser content of tire components as compared to conventional radial tires. The fibers, preferably cotton, are substantially less expensive than cords even if the cords are manufactured of cotton.

The radial tires according to the principles of the present invention demonstrate much improved road or terrain shock and vibration absorption and much less harshness and noise transmission as compared with conventional cord belted radial tires, and thus improved comfort of ride. This is extremely important for the types of vehicles under consideration, and their operational characteristics, when contrasted to passenger cars and trucks. Furthermore, tires designed and manufactured according to the principles of the present invention generate equal or lesser rolling resistance and thus vehicle fuel or electrical power consumption will be equal to or less than when the types of vehicle under consideration are equipped with cord belted radial tires. Furthermore, when these vehicles under consideration are equipped with radial tires designed and manufactured according to the principles of the present invention, less vehicle rollover will occur, while maintaining good vehicle stability and directional control.

The foregoing is a complete description of the preferred embodiment of the present invention. Numerous changes and modifications may be made without departing from the scope of the present invention, as defined in the following claims.

## Claims

1. A radial pneumatic tire of the type including a carcass, opposed side walls and a tread, the tire comprising means for restricting the periphery of the tire carcass against outward expansion and for preventing the radial cords of the tire carcass from spreading under rolling loads, characterised in that the carcass periphery restricting and cord spreading prevention means includes at least one belt ply positioned and aligned on the circumference of the tire carcass, the belt ply comprising an elastomeric matrix containing a plurality of discontinuous fibers, each of those fibers having a longitudinal axis, the fibers positioned in a plurality of rows and oriented such that the axes of the fibers are parallel to each other.

2. A pneumatic tire as claimed in claim 1, characterized in that the radial carcass periphery restricting and cord spreading prevention means includes at least two belt plies positioned and aligned adjacent the radial carcass body ply, each belt ply comprising an elastomeric matrix containing a plurality of discontinuous fibers, each of said fibers within each matrix having a longitudinal axis, the fibers within each matrix being positioned in a plurality of rows and oriented such that the axes of the fibers within one matrix are parallel to each other.

3. A pneumatic tire as claimed in claim 2, characterised in that the axes of the fibers of the first belt are parallel to the axes of the fibers of the second belt.

4. A pneumatic tire as claimed in claim 2, characterised in that the axes of the fibers in the first belt are perpendicular to the axes of the fibers in the second belt.

5. A pneumatic tire as claimed in claim 1, 2 or 3, characterised in that the axes of the fibers are parallel to the longitudinal axis of the belt.

6. A pneumatic tire as claimed in claim 1, 2 or 3, characterised in that the axes of the fibers are perpendicular to the longitudinal axis of the belt.

7. A pneumatic tire as claimed in any one of claims 1 to 6, characterised in that the fibers have a length of up to about 0.5 inches.

8. A pneumatic tire as claimed in any one of claims 1 to 7, characterised in that the fibers are chopped and oriented cotton.

9. A pneumatic tire as claimed in any of claims 1 to 8, characterised in that the fiber diameter does not exceed about 0.003 inches (0.0762mms).

10. A pneumatic tire as claimed in any one of claims 1 to 9, characterised in that the fiber is formed of nylon, rayon, polyester, cotton, metal, aramid, or glass.

11. A pneumatic tire as claimed in any one of claims 1 to 10, characterised in that the or each belt ply is positioned over the radial ply carcass body.

# FIG.1

# FIG. 2

# FIG. 3